# EUROPEAN PATENT SPECIFICATION

(11) **EP 4 458 775 B1**
(45) Date of publication and mention of the grant of the patent: **02.07.2025**
(21) Application number: 23200124.8
(22) Date of filing: 27.09.2023
(51) Int. Cl.: C01G 53/54, H01M 4/36, H01M 4/505, H01M 4/525, H01M 10/0562, H01M 4/62, H01M 10/052

(54) **PREPARATION METHOD OF COMPOSITE CATHODE MATERIAL**
VERFAHREN ZUR HERSTELLUNG EINES VERBUNDKATHODENMATERIALS
PROCÉDÉ DE PRÉPARATION D'UN MATÉRIAU DE CATHODE COMPOSITE

(30) Priority: 05.05.2023 TW 112116679
(43) Date of publication of application: 06.11.2024
(73) Proprietor: Advanced Lithium Electrochemistry Co., Ltd., Taoyuan City 330 (TW)
(72) Inventor: He, Ding-De, 330 Taoyuan City (TW); Hsieh, Han-Wei, 330 Taoyuan City (TW)
(74) Representative: 2K Patentanwälte Blasberg Kewitz & Reichel

(56) References cited:
- US-B1- 8 906 553
- LI LI ET AL: "Stabilizing a high-voltage LiNi 0.5 Mn 1.5 O 4 cathode towards all solid state batteries: a Li-Al-Ti-P-O solid electrolyte nano-shell with a host material", NANOSCALE, vol. 11, no. 18, 9 May 2019 (2019-05-09), United Kingdom, pages 8967 - 8977, XP093141184, ISSN: 2040-3364, DOI: 10.1039/C9NR01655D

## Description

### FIELD OF THE INVENTION

The present disclosure relates to a cathode material of a secondary battery, and more particularly to a preparation method of a composite cathode material including a dry mechanical mixing manner to treat the precursor and the solid electrolyte material so that a coating layer made of solid electrolyte material is coated on the surface of the cathode material simultaneously when the cathode material is formed. The process is simple and fast, and the performance of the cathode material is improved sufficiently.

### BACKGROUND OF THE INVENTION

In recent years, the requirements for electric vehicles and energy storage devices are gradually increased, and the secondary batteries used therein are also required to have good performance. In many types of the batteries, lithium manganese nickel oxide / spinel (LiMn_{1.5}Ni_{0.5}O₄) is a cathode material that can be charged at high voltage (5V). Due to the high potential, the lithium manganese nickel oxide material has a higher energy density compared to lithium cobalt oxide and lithium iron phosphate. LMNO-based batteries can be used in high energy and high rate applications.

However, the LMNO will be decomposed by the electrolyte under high voltage, and it is easy to lead to the problems such as the decline of capacity development, rate performance and cycle life. Therefore, the surface modification of LMNO has become an important topic. A conventional way of using LMNO in combination with the solid electrolyte is to coat the solid electrolyte on the LMNO material to improve the microstructure of the LMNO surface. Thus, an ion-conducting and conductive framework surface is formed on the surface of LMNO. The problem of poor circulation of LMNO under high pressure is alleviated sufficiently. The conductivity of LMNO is improved. However, the conventional LMNO with the solid electrolyte coated thereon needs to go through complicated processes, and the performance of LMNO may be degraded during the processes of coating the solid electrolyte. US 8 906 553 B1 discloses a process for preparing LiNi0.5Mn1.5O4 particles coated with a solid electrolyte in which a lithium source is mixed with a nickel manganese precursor and sintered to form the core material which is then coated with a solid electrolyte material.

Therefore, there is a need to provide a preparation method of a composite cathode material including a dry mechanical mixing manner to treat the precursor and the solid electrolyte material so that a coating layer made of solid electrolyte material is coated on the surface of the cathode material simultaneously when the cathode material is formed. The process is simple and fast, the performance of the cathode material is improved sufficiently, and the drawbacks encountered by the prior arts are obviated.

### SUMMARY OF THE INVENTION

An object of the present disclosure is to provide a preparation method of a composite cathode material. By using the dry mechanofusion method to mix the precursor and the solid electrolyte material, the solid electrolyte material is coated on the surface of the cathode material simultaneously when the cathode material is formed. The process is simple and fast, and the performance of the cathode material is improved sufficiently. For the application of lithium nickel manganese oxide (LMNO) cathode material coated the solid electrolyte of lithium titanium aluminum phosphate (Li_{1.3}Al_{0.3}Ti_{1.7}(PO₄)₃, LATP), the dry mechanical mixing method is used to mix the nickel-manganese compound material, such as Ni_{0.25}Mn_{0.75}(OH)₂ or Ni_{0.25}Mn_{0.75}O is mixed with the solid electrolyte material in advance, and then the lithium source is added to mix and sintered to form a composite cathode material with a core and a coating layer. The inner core is made of LiNi_{0.5}Nb_{1.5}O₄, and the outer coating layer is made of the solid electrolyte material. Since the solid electrolyte material of lithium aluminum titanium phosphate (LATP) has good ionic conductivity, when the lithium aluminum titanium phosphate (LATP) is coated on the surface of the cathode material of lithium nickel manganese oxide (LMNO) to form a composite cathode material, it facilitates to improve the rate performance and cycle performance of the cathode material of lithium nickel manganese oxide (LMNO), and the coating layer of lithium aluminum titanium phosphate (LATP) can also provide the protection to slow down the impact of the material surface being damaged by the electrolyte solution. Furthermore, in order to obtain the optimal coating effect of the solid electrolyte material, the weight percentage of the solid electrolyte material relative to nickel-manganese compound material, such as Ni_{0.25}Mn_{0.75}(OH)₂ or Ni_{0.25}Mn_{0.75}O, is controlled and ranged from 0.2 wt.% to 1.0 wt.%, preferably between 0.2 wt.% and 0.3 wt.%. That is to say, in the present disclosure, only a small amount of lithium titanium aluminum phosphate (LATP) solid electrolyte material is added to form the coating layer to improve the rate performance of the cathode material of lithium nickel manganese oxide (LMNO), and the manufacturing cost is further reduced.

Another object of the present disclosure is to provide a preparation method of a composite cathode material. Compared with direct coating of the cathode material of lithium nickel manganese oxide (LMNO) with the lithium aluminum titanium phosphate (LATP), the lithium aluminum titanium phosphate (LATP) is mixed with the pretreatment material of the nickel-manganese compound material through a mechanical mixing way such as a mechanofusion method in the present disclosure. Then, the pretreatment material with the LATP mixed is sintered to form the composite cathode material of lithium nickel manganese oxide (LMNO) with the LATP coated thereon. In this way, the generation of Mn³⁺ is reduced, and the dissolution of Mn³⁺ from the positive electrode material and the reduction and deposition on the negative electrode are avoided from resulting in cycle electrical decline. The working temperature of the mixing process is ranged for example between 25°C and 45°C, and the mixing processing is performed in stages at a rotating speed ranged from 700 rpm to 3500 rpm for 5 minutes and 30 minutes. By controlling the mixing way of lithium aluminum titanium phosphate (LATP) and the pretreatment material, the working temperature, the rotating speed and the working time, it allows to avoid the structural defects of the solid electrolyte coating layer caused by high temperature and the excessive friction between particles. At the same time, it ensures that the cathode material of lithium nickel manganese oxide (LMNO) can exert low impedance and good charge and discharge performance through the coating layer of LATP solid electrolyte material.

In accordance with an aspect of the present disclosure, a preparation method of a composite cathode material is provided and includes steps of: (a) providing a nickel-manganese compound material, wherein the nickel-manganese compound material is NiₓMn_{y}(OH)₂ or NiₓMn_{y}O, x+y=1; (b) providing a solid electrolyte material, and mixing the nickel-manganese compound material and the solid electrolyte material in a mechanical mixing into a composite material, wherein the solid electrolyte material has a weight percentage relative to the nickel-manganese compound material, and the weight percentage is ranged from 0.2 wt.% to 1.0 wt.%; and (c) providing a lithium source, mixing the lithium source and the composite material, and sintering to form the composite cathode material, wherein the composite cathode material includes a core and a coating layer, the core is made of LiNi₂ₓMn_{2y}O₄, and coated by the coating layer, and the coating layer is made of the solid electrolyte material.

In an embodiment, the nickel-manganese compound material is Ni_{0.25}Mn_{0.75}(OH)₂, the step (b) includes a first heat treatment process after the mechanical mixing, and the first heat treatment process has a holding temperature ranged from 300 °C to 850 °C, a treating time ranged from 5 hours to 7 hours, and a temperature rising rate of 2.5°C/min.

In an embodiment, the nickel-manganese compound material is Ni_{0.25}Mn_{0.75}O, the step (a) includes a pre-oxidation process, and the pre-oxidation process has a holding temperature ranged from 300°C to 850 °C, a treating time ranged from 5 hours to 7 hours, and a temperature rising rate of 2.5 °C/min.

In an embodiment, the step (b) includes a first heat treatment process after the mechanical mixing, and the first heat treatment process has a holding temperature ranged from 300°C to 750°C, a treating time ranged from 5 hours to 7 hours, and a temperature rising rate of 2.5°C/min.

In an embodiment, the nickel-manganese compound material and the solid electrolyte material are mixed at a rotating speed of 700 rpm for 5 minutes, mixed at a rotating speed of 1400 rpm for 5 minutes, mixed at a rotating speed of 2100 rpm for 5 minutes, mixed at a rotating speed of 2800 rpm for 10 minutes and mixed at a rotating speed of 3500 rpm for 10 minutes in the mechanical mixing of the step (b).

In an embodiment, the nickel-manganese compound material and the solid electrolyte material are mixed at a working temperature ranged from 25 °C to 45 °C in the mechanical mixing of the step (b).

In an embodiment, the solid electrolyte material has a chemical formula of Li_{1+z}Al_{z}Ti_{2-z}(PO₄)₃, z≦2.

In an embodiment, the mechanical mixing includes a mechanofusion method.

In an embodiment, the lithium source and the composite material are mixed at a rotating speed of 700 rpm for 5 minutes, and mixed at a rotating speed of 1400 rpm for 30 minutes in a mechanical manner of the step (c).

In an embodiment, the step (c) includes a second heat treatment process, and the second heat treatment process has a holding temperature ranged from 300°C to 710°C, a treating time ranged from 24 hours to 30 hours, and a temperature rising rate of 2.5°C/min.

In an embodiment, the nickel-manganese compound material has a molar ratio of 1:1.02 relative to the lithium source in the composite material in the step (c).

In an embodiment, the weight percentage of the solid electrolyte material relative to the nickel-manganese compound material is ranged from 0.2 wt.% to 0.3 wt.%.

In an embodiment, the nickel-manganese compound material has an average particle size ranged from 10 microns to 20 microns, and the solid electrolyte material has an average particle size ranged from 1 micron and 5 microns.

### BRIEF DESCRIPTION OF THE DRAWINGS

The above contents of the present disclosure will become more readily apparent to those ordinarily skilled in the art after reviewing the following detailed description and accompanying drawings, in which:
FIG. 1 is a schematic structural view illustrating a composite cathode material according to an embodiment of the present disclosure;
FIG. 2A is a SEM image showing the nickel-manganese compound material of Ni_{0.25}Mn_{0.75}(OH)₂ of the present disclosure;
FIG. 2B is a SEM image showing the nickel-manganese compound material of Ni_{0.25}Mn_{0.75}O of the present disclosure;
FIG. 2C is a SEM image showing the lithium aluminum titanium phosphate (LATP) of the present disclosure;
FIG. 3 is a flow chart illustrating a preparation method of the composite cathode material according to a first embodiment of the present disclosure;
FIGS. 4A to 4D are SEM images showing the cathode electrode material of the first comparative example;
FIGS. 5A to 5D are SEM images showing the composite cathode material of the first example of the present disclosure;
FIGS. 6A to 6D are SEM images showing the composite cathode material of the second example of this present disclosure;
FIGS. 7A to 7D are SEM images showing the composite cathode material of the third example of this present disclosure;
FIG. 8 shows the voltage vs. the charge and discharge capacity curves of the first comparative example, the first example, the second example and the third example of the present disclosure;
FIG. 9 shows the retention vs. the cycle number curves of the first comparative example, the first example, the second example and the third example of the present disclosure;
FIG. 10 is a flow chart illustrating a preparation method of the composite cathode material according to a second embodiment of the present disclosure;
FIGS. 11A to 11D are SEM images showing the composite cathode material of the fourth example of this present disclosure;
FIGS. 12A to 12D are SEM images showing the composite cathode material of the fifth example of this present disclosure;
FIGS. 13A to 13D are SEM images showing the composite cathode material of the sixth example of this present disclosure;
FIG. 14 shows the voltage vs. the charge and discharge capacity curves of the first comparative example, the fourth example, the fifth example and the sixth example of the present disclosure;
FIG. 15 shows the retention vs. the cycle number curves of the first comparative example, the fourth example, the fifth example and the sixth example of the present disclosure;
FIG. 16 shows the voltage vs. the charge and discharge capacity curves of the second comparative example, the third comparative example, the first example and the fourth example of the present disclosure; and
FIG. 17 shows the retention vs. the cycle number curves of the third comparative example, the first example and the fourth example of the present disclosure.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, although the "first," "second," "third," and the like terms in the claims be used to describe the various elements can be appreciated, these elements should not be limited by these terms, and these elements are described in the respective embodiments are used to express the different reference numerals, these terms are only used to distinguish one element from another element. For example, a first element could be termed a second element, and, similarly, a second element could be termed a first element, without departing from the scope of example embodiments. Besides, "and / or" and the like may be used herein for including any or all combinations of one or more of the associated listed items. Alternatively, the word "about" means within an acceptable standard error of ordinary skill in the art-recognized average. In addition to the operation / working examples, or unless otherwise specifically stated otherwise, in all cases, all of the numerical ranges, amounts, values and percentages, such as the number for the herein disclosed materials, time duration, temperature, operating conditions, the ratio of the amount, and the like, should be understood as the word "about" decorator. Accordingly, unless otherwise indicated, the numerical parameters of the present invention and scope of the appended patent proposed is to follow changes in the desired approximations. At least, the number of significant digits for each numerical parameter should at least be reported and explained by conventional rounding technique is applied. Herein, it can be expressed as a range between from one endpoint to the other or both endpoints. Unless otherwise specified, all ranges disclosed herein are inclusive.

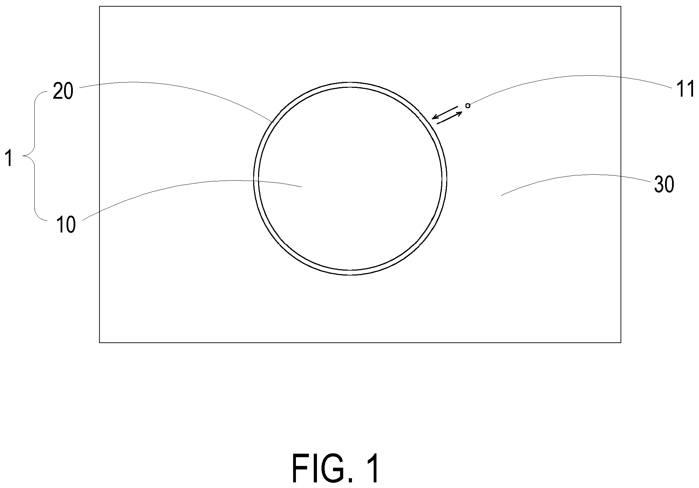

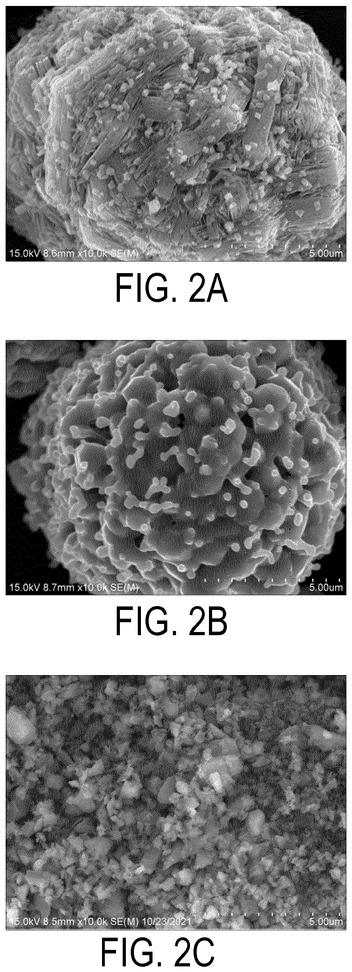

FIG. 1 is a schematic structural view illustrating a composite cathode material according to an embodiment of the present disclosure. In the embodiment, the composite cathode material 1 includes a core 10 and a coating layer 20. The core 10 is made of the cathode material of lithium nickel manganese oxide (LNMO). Preferably but not exclusively, the lithium nickel manganese oxide (LNMO) is LiNi_{0.5}Mn_{1.5}O₄. In the embodiment, the coating layer 20 is made of the solid electrolyte material of lithium aluminum titanium phosphate (LATP). Preferably but not exclusively, the lithium aluminum titanium phosphate (LATP) is Li_{1.3}Al_{0.3}Ti_{1.7}(PO₄)₃. In the embodiment, the lithium nickel manganese oxide (LMNO) cathode material is a high-voltage cathode material that does not contain cobalt elements, and has a high redox potential and a high energy density. Preferably but not exclusively, the composite cathode material 1 is used in the liquid electrolyte 30, and Li⁺ ions 11 are allowed in the intercalation/deintercalation with the lithium nickel manganese oxide (LMNO) cathode material in the inner core 10 through the coating layer 20 of the solid electrolyte. Notably, in the preparation method of the present disclosure, the lithium titanium aluminum phosphate (LATP) is mixed with the pretreatment material through a mechanical mixing way such as a mechanofusion method. Thereafter, the pretreatment material with the LATP mixed is sintered to form the composite cathode material of lithium nickel manganese oxide (LMNO) with the LATP coated thereon. Preferably but not exclusively, the pretreatment material is the nickel-manganese compound material, such as the Ni_{0.25}Mn_{0.75}(OH)₂ or Ni_{0.25}Mn_{0.75}O. The lithium nickel manganese oxide (LMNO) cathode material is not directly used for coating process. FIG. 2A is a SEM image showing the nickel-manganese compound material of Ni_{0.25}Mn_{0.75}(OH)₂ of the present disclosure. FIG. 2B is a SEM image showing the nickel-manganese compound material of Ni_{0.25}Mn_{0.75}O of the present disclosure. FIG. 2C is a SEM image showing the lithium aluminum titanium phosphate (LATP) of the present disclosure. Certainly, the types, the composition ratio and the material properties of the core 10 and the coating layer 20 for the composite cathode material 1 are adjustable according to the practical requirements, and are not limited thereto. In the following descriptions, the dry mechanofusion method is used to pretreat the precursor and the solid electrolyte material in the preparation method of the composite cathode material 1 of the present disclosure.

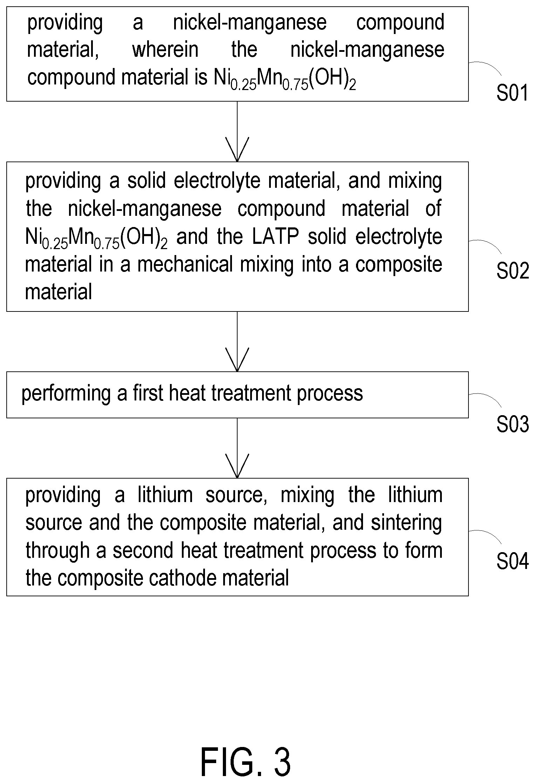

FIG. 3 is a flow chart illustrating a preparation method of the composite cathode material according to a first embodiment of the present disclosure. In the embodiment, a nickel-manganese compound material is provided, as shown in the step S01. Preferably but not exclusively, the nickel-manganese compound material is Ni_{0.25}Mn_{0.75}(OH)₂. In the embodiment, the nickel-manganese compound material of Ni_{0.25}Mn_{0.75}(OH)₂ has an average particle size ranged from 10 microns to 20 microns. Preferably but not exclusively, the average particle size of the nickel-manganese compound material is 12.90 microns with the surface area of 0.6 m²/g. In addition, a solid electrolyte material of lithium titanium aluminum phosphate (LATP) is provided. The solid electrolyte material has an average particle size ranged from 1 micron to 5 microns. Preferably but not exclusively, the average particle size of the solid electrolyte material is 1.79 microns. In the embodiment, the nickel-manganese compound material of Ni_{0.25}Mn_{0.75}(OH)₂ and the LATP solid electrolyte material are mixed in a mechanical mixing to form a composite material, as shown in the step S02. In the embodiment, the LATP solid electrolyte material has a weight percentage relative to the nickel-manganese compound material of Ni_{0.25}Mn_{0.75}(OH)₂, and the weight percentage is ranged from 0.2 wt.% to 1.0 wt.%. The mechanical mixing refers to the dry mechanofusion method. In the step S02, the nickel-manganese compound material and the solid electrolyte material are mixed at a rotating speed of 700 rpm for 5 minutes, mixed at a rotating speed of 1400 rpm for 5 minutes, mixed at a rotating speed of 2100 rpm for 5 minutes, mixed at a rotating speed of 2800 rpm for 10 minutes and mixed at a rotating speed of 3500 rpm for 10 minutes in the mechanical mixing. Preferably but not exclusively, the nickel-manganese compound material and the solid electrolyte material are mixed at a working temperature ranged from 25 °C to 45 °C in the mechanical mixing. After the forgoing mechanical mixing is completed, a first heat treatment process is performed, as shown in the step S03. Preferably but not exclusively, the first heat treatment process has a holding temperature ranged from 300°C to 850°C, a treating time ranged from 5 hours to 7 hours, and a temperature rising rate of 2.5°C/min.

Thereafter, in the step S04, a lithium source such as the lithium hydroxide is provided, and the lithium source and the foregoing composite material are mixed and sintered to form the composite cathode material 1. Preferably but not exclusively, the nickel-manganese compound material of Ni_{0.25}Mn_{0.75}(OH)₂ has a molar ratio of 1:1.02 relative to the lithium source in the composite material. In the step S04, the lithium source and the composite material are sintered in a second heat treatment process. Preferably but not exclusively, the second heat treatment process has a holding temperature ranged from 300°C to 710°C, a treating time ranged from 24 hours to 30 hours, and a temperature rising rate of 2.5°C/min. In the embodiment, the obtained composite cathode material 1, as shown in FIG. 1, includes a core 10 and a coating layer 20. Preferably but not exclusively, the core 10 is made of LiNi_{0.5}Mn_{1.5}O₄, and coated by the coating layer 20, and the coating layer 20 is made of the LATP solid electrolyte material.

Notably, in the embodiment, the weight percentage of LATP solid electrolyte material relative to the nickel-manganese compound material of Ni_{0.25}Mn_{0.75}(OH)₂ is further controlled and ranged from 0.2 wt.% to 1.0 wt.%. so as to obtain an optimized coating effect of the solid electrolyte material.

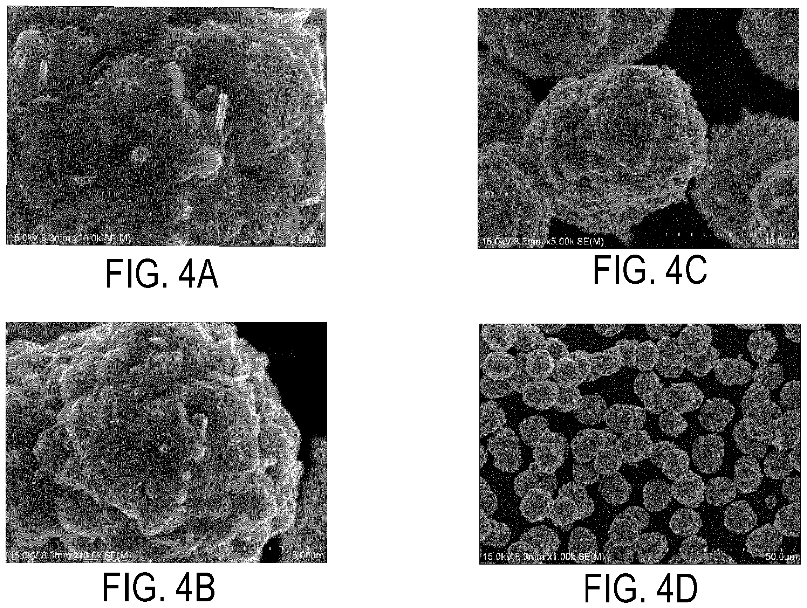

FIGS. 4A to 4D are SEM images showing the cathode electrode material of the first comparative example. In the first comparative example, the lithium nickel manganese oxide (LMNO) cathode material of LiNi_{0.5}Mn_{1.5}O₄) is not coated with the LATP solid electrolyte material.

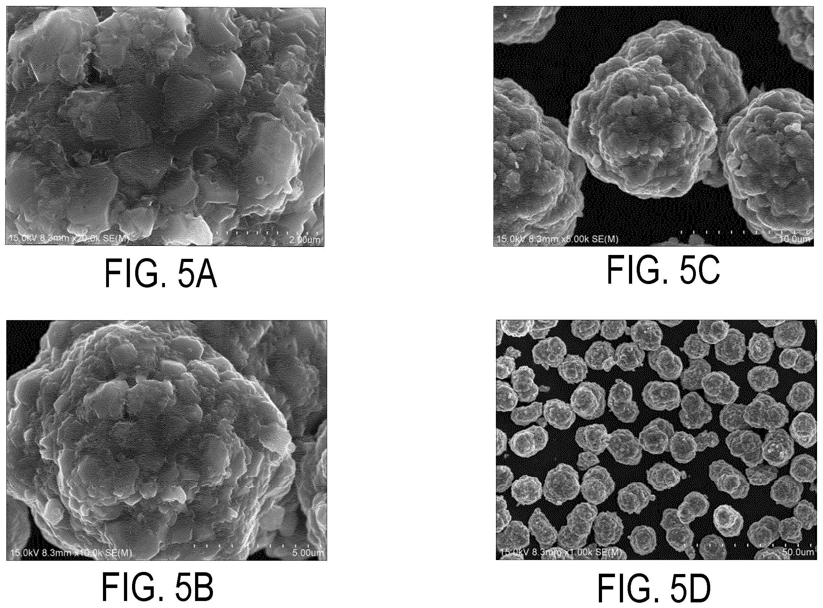

FIGS. 5A to 5D are SEM images showing the composite cathode material of the first example of the present disclosure. In the first example, the weight percentage of LATP solid electrolyte material relative to the nickel-manganese compound material of Ni_{0.25}Mn_{0.75}(OH)₂ is 0.2 wt.%, and the composite cathode material is obtained through the forgoing steps S01~S04.

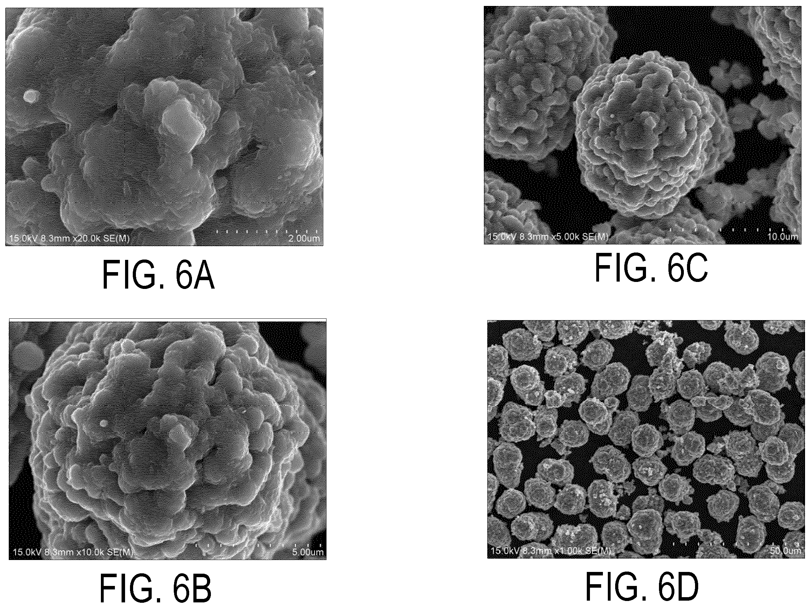

FIGS. 6A to 6D are SEM images showing the composite cathode material of the second example of this present disclosure. In the second example, the weight percentage of LATP solid electrolyte material relative to the nickel-manganese compound material of Ni_{0.25}Mn_{0.75}(OH)₂ is 0.5 wt.%, and the composite cathode material is obtained through the forgoing steps S01~S04.

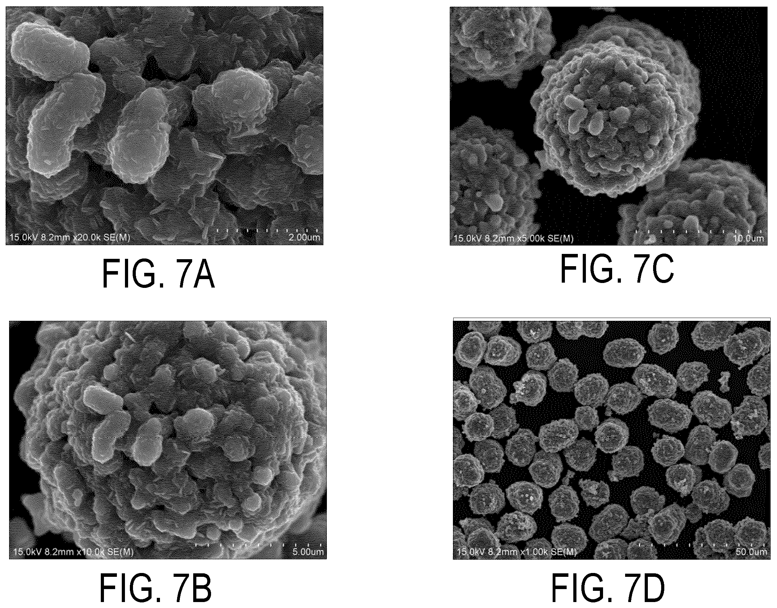

FIGS. 7A to 7D are SEM images showing the composite cathode material of the third example of this present disclosure. In the third example, the weight percentage of LATP solid electrolyte material relative to the nickel-manganese compound material of Ni_{0.25}Mn_{0.75}(OH)₂ is 1.0 wt.%, and the composite cathode material is obtained through the forgoing steps S01~S04.

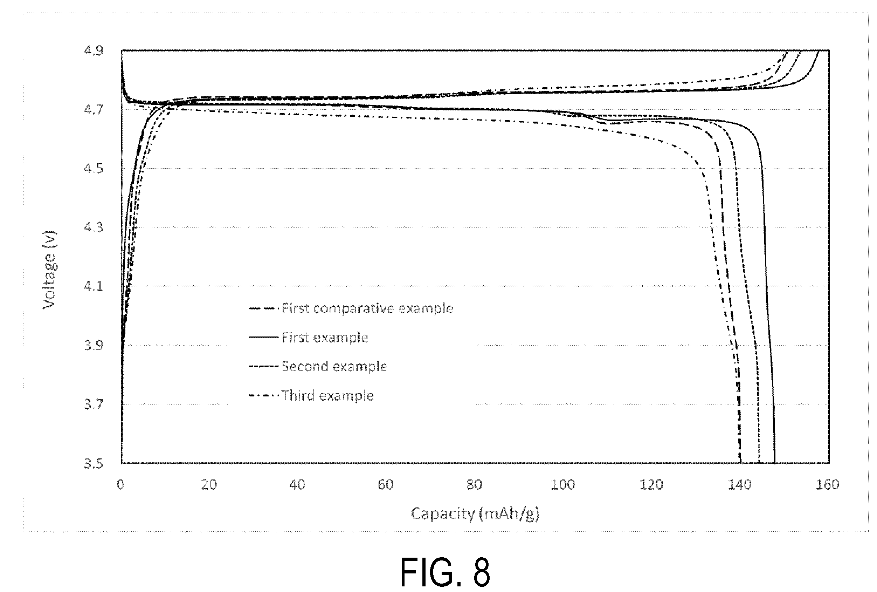

FIG. 8 shows the voltage vs. the charge and discharge capacity curves of the first comparative example, the first example, the second example and the third example of the present disclosure. The button batteries made of the first comparative example, the first example, the second example and the third example of the present disclosure are tested at a charge-discharge rate (C-rate) of 0.1C to obtain the results. The positive electrode sheet of the button battery is made of the cathode material, the conductive agent and the binder in a ratio of 94:4:2, and the negative electrode sheet is made of lithium metal. The electrolyte solution of the button battery includes 1.15 M lithium hexafluorophosphate (LiPF₆), ethylene carbonate (EC), diethyl carbonate (DEC), ethyl methyl carbonate (EMC) and 5 wt.% fluoroethylene carbonate (FEC). The 0.1C first-cycle and the second-cycle charge and discharge capacity results are listed in Table 1. In addition, Table 1 also lists the rate performance results of the first comparative example, the first example, the second example and the third example of the present disclosure charged at 0.2 and then discharged at 1C/2C/3C/5C. As shown in FIG. 8 and Table 1, the capacities and the rate performance of the first example, the second example and the third example of the present disclosure are all better than those of the first comparative example. It can be seen that the dry mechanical mixing method is used in the present disclosure to mix the nickel-manganese compound material of Ni_{0.25}Mn_{0.75}(OH)₂ and the LATP solid electrolyte material in advance. Then, the lithium source is added to mix and sinter with the forgoing composite material to form the composite cathode material with a core and a coating layer. In that, the capacity and the rate performance of the lithium nickel manganese oxide (LMNO) cathode material is improved.

**Table 1**

| Samples | 0.1C 1st-cycle charge/discharge capacity (mAh/g) | 0.1C 2nd-cycle charge/discharge capacity (mAh/g) | 1C/2C/3C/5C Discharge capacity (mAh/g) | Coulomb efficiency C.E. % |
|---|---|---|---|---|
| First comparative example | 150/140 | 146/140 | 133/121/110/89 | 93.3 |
| First example | 161/146 | 156/146 | 143/135/127/110 | 90.7 |
| Second example | 159/142 | 150/144 | 140/132/124/105 | 89.3 |
| Third example | 154/139 | 148/140 | 135/126/117/99 | 90.3 |

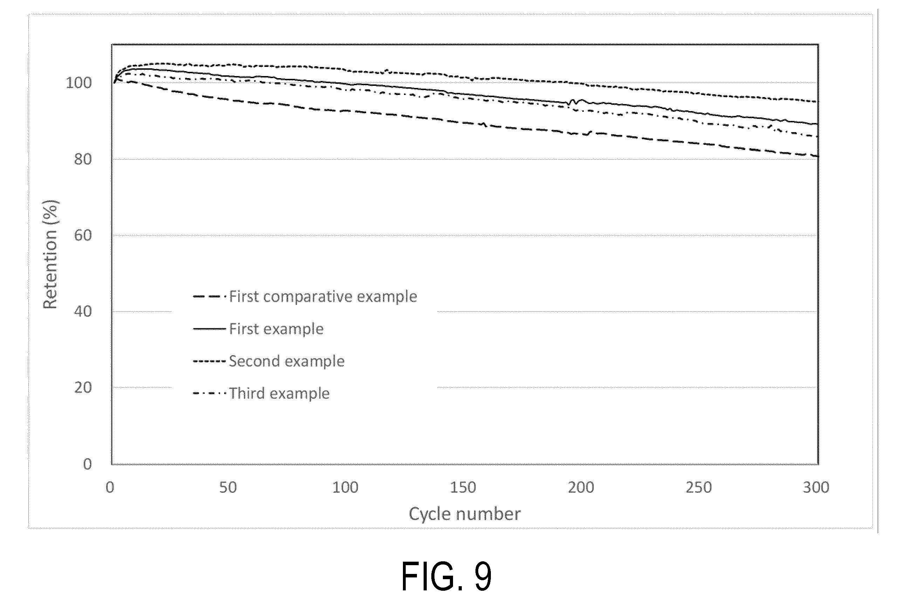

FIG. 9 shows the retention vs. the cycle number curves of the first comparative example, the first example, the second example and the third example of the present disclosure. The button batteries made of the first comparative example, the first example, the second example and the third example of the present disclosure are tested at a charge-discharge rate (C-rate) of 1C to obtain the results. As shown in FIG. 9, the capacity retention rates of the first example, the second example and the third example of the present disclosure are all better than those of the first comparative example. It can be seen that the composite positive electrode material formed by the preparation method of the present disclosure has the advantages of improving the cycle performance and the cycle life of lithium nickel manganese oxide (LMNO) cathode material.

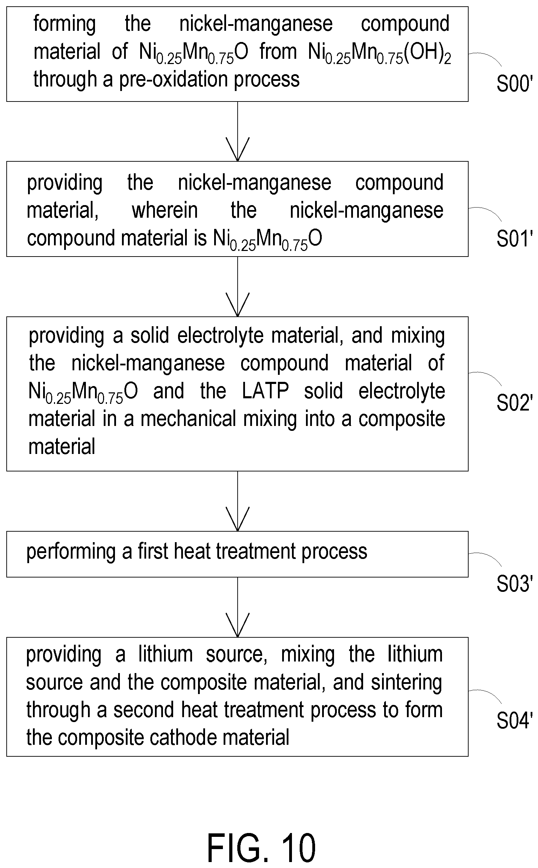

FIG. 10 is a flow chart illustrating a preparation method of the composite cathode material according to a second embodiment of the present disclosure. In the embodiment, a nickel-manganese compound material is provided, as shown in the step S01'. Preferably but not exclusively, the nickel-manganese compound material is Ni_{0.25}Mn_{0.75}O. In the embodiment, the nickel-manganese compound material of Ni_{0.25}Mn_{0.75}O is made from Ni_{0.25}Mn_{0.75}(OH)₂ through a pre-oxidation process. As shown in the step S00', Ni_{0.25}Mn_{0.75}(OH)₂ is treated through a pre-oxidation process to obtain the nickel-manganese compound material of Ni_{0.25}Mn_{0.75}O. In the embodiment, the nickel-manganese compound material of Ni_{0.25}Mn_{0.75}O has an average particle size ranged from 10 microns to 20 microns. Preferably but not exclusively, the average particle size of the nickel-manganese compound material is 13.96 microns with the surface area of 20.49 m²/g. Preferably but not exclusively, the pre-oxidation process has a holding temperature ranged from 300°C to 850 °C, a treating time ranged from 5 hours to 7 hours, and a temperature rising rate of 2.5 °C/min. Certainly, in other embodiments, the nickel-manganese compound material of Ni_{0.25}Mn_{0.75}O can be obtained by other processing procedures, and the present disclosure is not limited thereto. Thereafter, as shown in the step S02', a solid electrolyte material of lithium titanium aluminum phosphate (LATP) is provided, the nickel-manganese compound material of Ni_{0.25}Mn_{0.75}O and the LATP solid electrolyte material are mixed in a dry mechanofusion method to form a composite material. In the embodiment, the LATP solid electrolyte material has a weight percentage relative to the nickel-manganese compound material of Ni_{0.25}Mn_{0.75}O, and the weight percentage is ranged from 0.2 wt.% to 1.0 wt.%. Preferably but not exclusively, in the step S02', the nickel-manganese compound material and the solid electrolyte material are mixed at a rotating speed of 700 rpm for 5 minutes, mixed at a rotating speed of 1400 rpm for 5 minutes, mixed at a rotating speed of 2100 rpm for 5 minutes, mixed at a rotating speed of 2800 rpm for 10 minutes and mixed at a rotating speed of 3500 rpm for 10 minutes in the mechanical mixing. Furthermore, the nickel-manganese compound material and the solid electrolyte material are mixed at a working temperature ranged from 25 °C to 45 °C in the mechanical mixing. After the forgoing mechanical mixing is completed, a first heat treatment process is performed, as shown in the step S03'. Preferably but not exclusively, the first heat treatment process has a holding temperature ranged from 300°C to 750°C, a treating time ranged from 5 hours to 7 hours, and a temperature rising rate of 2.5°C/min.

Thereafter, in the step S04', a lithium source such as the lithium hydroxide is provided, and the lithium source and the foregoing composite material are mixed and sintered to form the composite cathode material. Preferably but not exclusively, the forgoing nickel-manganese compound material of Ni_{0.25}Mn_{0.75}O has a molar ratio of 1:1.02 relative to the lithium source in the composite material. In the step S04', the lithium source and the composite material are sintered in a second heat treatment process. Preferably but not exclusively, the second heat treatment process has a holding temperature ranged from 300°C to 710°C, a treating time ranged from 24 hours to 30 hours, and a temperature rising rate of 2.5°C/min. In the embodiment, the obtained composite cathode material 1, as shown in FIG. 1, includes a core 10 and a coating layer 20. Preferably but not exclusively, the core 10 is made of LiNi_{0.5}Mn_{1.5}O₄, and coated by the coating layer 20, and the coating layer 20 is made of the LATP solid electrolyte material.

Notably, in the embodiment, the weight percentage of LATP solid electrolyte material relative to the nickel-manganese compound material of Ni_{0.25}Mn_{0.75}O is further controlled and ranged from 0.2 wt.% to 1.0 wt.%. so as to obtain an optimized coating effect of the solid electrolyte material.

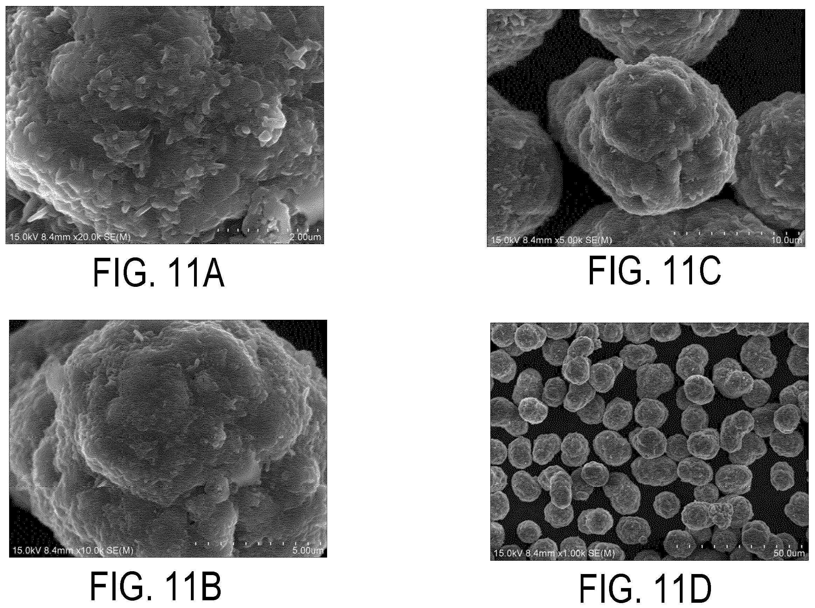

FIGS. 11A to 11D are SEM images showing the composite cathode material of the fourth example of this present disclosure. In the fourth example, the weight percentage of LATP solid electrolyte material relative to the nickel-manganese compound material of Ni_{0.25}Mn_{0.75}O is 0.2 wt.%, and the composite cathode material is obtained through the forgoing steps S01'~S04'.

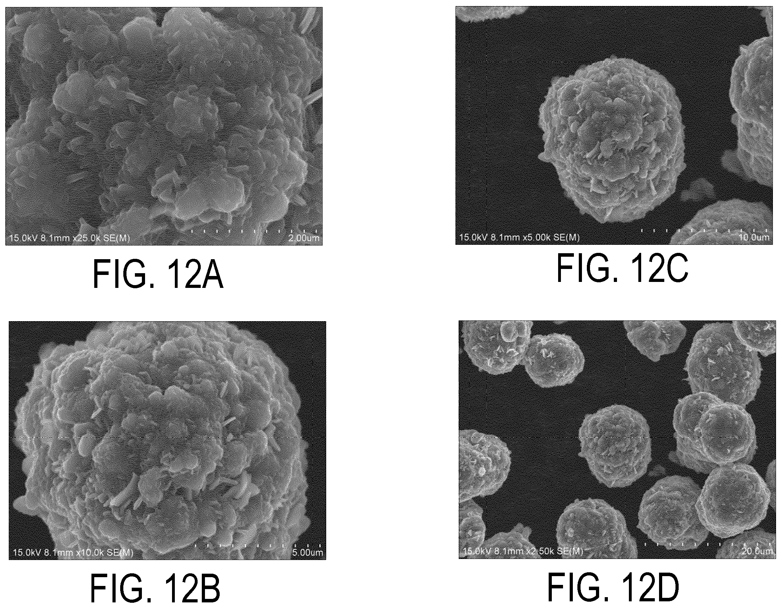

FIGS. 12A to 12D are SEM images showing the composite cathode material of the fifth example of this present disclosure. In the fifth example, the weight percentage of LATP solid electrolyte material relative to the nickel-manganese compound material of Ni_{0.25}Mn_{0.75}O is 0.3 wt.%, and the composite cathode material is obtained through the forgoing steps S01'-S04'.

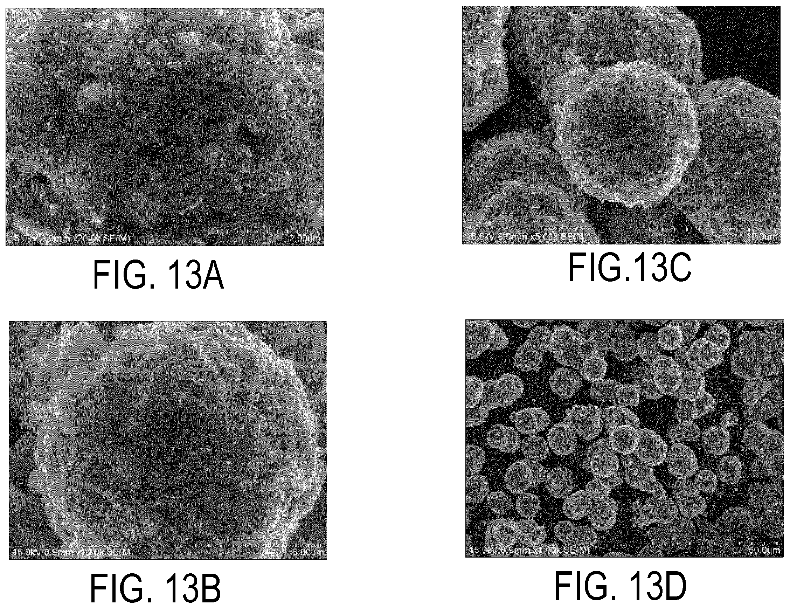

FIGS. 13A to 13D are SEM images showing the composite cathode material of the sixth example of this present disclosure. In the sixth example, the weight percentage of LATP solid electrolyte material relative to the nickel-manganese compound material of Ni_{0.25}Mn_{0.75}O is 0.5 wt.%, and the composite cathode material is obtained through the forgoing steps S01'~S04'.

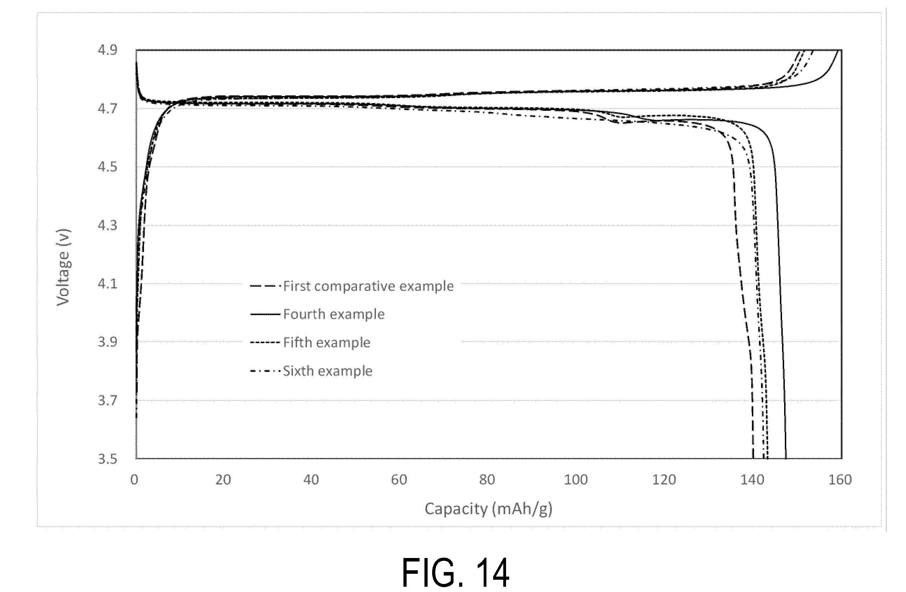

FIG. 14 shows the voltage vs. the charge and discharge capacity curves of the first comparative example, the fourth example, the fifth example and the sixth example of the present disclosure. The button batteries made of the first comparative example, the fourth example, the fifth example and the sixth example of the present disclosure are tested at a charge-discharge rate (C-rate) of 0.1C to obtain the results. The positive electrode sheet of the button battery is made of the cathode material, the conductive agent and the binder in a ratio of 94:4:2, and the negative electrode sheet is made of lithium metal. The electrolyte solution of the button battery includes 1.15 M lithium hexafluorophosphate (LiPF₆), ethylene carbonate (EC), diethyl carbonate (DEC), ethyl methyl carbonate (EMC) and 5 wt.% fluoroethylene carbonate (FEC). The 0.1C first-cycle and the second-cycle charge and discharge capacity results are listed in Table 2. In addition, Table 2 also lists the rate performance results of the first comparative example, the fourth example, the fifth example and the sixth example of the present disclosure charged at 0.2 and then discharged at 1C/2C/3C/5C. As shown in FIG. 14 and Table 2, the capacities and the rate performance of the fourth example, the fifth example and the sixth example of the present disclosure are all better than those of the first comparative example. It can be seen that the dry mechanical mixing method is used in the present disclosure to mix the nickel-manganese compound material of Ni_{0.25}Mn_{0.75}O and the LATP solid electrolyte material in advance. Then, the lithium source is added to mix and sinter with the forgoing composite material to form the composite cathode material with a core and a coating layer. In that, the capacity and the rate performance of the lithium nickel manganese oxide (LMNO) cathode material is improved.

**Table 2**

| Samples | 0.1C 1st-cycle charge/discharge capacity (mAh/g) | 0.1C 2nd-cycle charge/discharge capacity (mAh/g) | 1C/2C/3C/5C Discharge capacity (mAh/g) | Coulomb efficiency C.E. % |
|---|---|---|---|---|
| First comparative example | 150/140 | 146/140 | 133/121/110/89 | 93.3 |
| Fourth example | 163/146 | 156/146 | 140/129/119/97 | 89.6 |
| Fifth example | 160/141 | 150/142 | 136/127/118/99 | 88.1 |
| Sixth example | 160/140 | 152/141 | 136/128/120/103 | 87.5 |

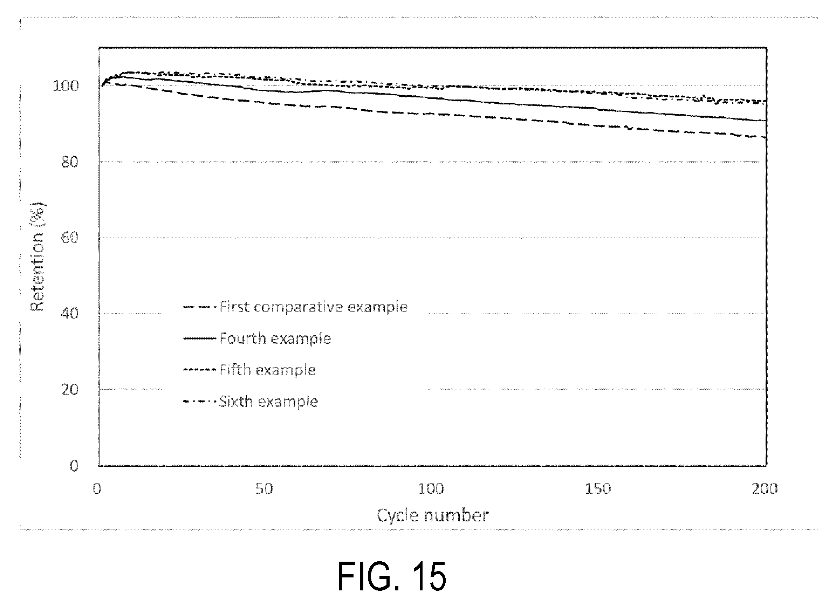

FIG. 15 shows the retention vs. the cycle number curves of the first comparative example, the fourth example, the fifth example and the sixth example of the present disclosure. The button batteries made of the first comparative example, the fourth example, the fifth example and the sixth example of the present disclosure are tested at a charge-discharge rate (C-rate) of 1C to obtain the results. As shown in FIG. 15, the capacity retention rates of the fourth example, the fifth example and the sixth example of the present disclosure are all better than those of the first comparative example. It can be seen that the composite positive electrode material formed by the preparation method of the present disclosure has the advantages of improving the cycle performance and the cycle life of lithium nickel manganese oxide (LMNO) cathode material.

From the above, the weight percentage of the LATP solid electrolyte material relative to the nickel-manganese compound material, such as Ni_{0.25}Mn_{0.75}(OH)₂ or Ni_{0.25}Mn_{0.75}O, is controlled and ranged from 0.2 wt.% to 1.0 wt.% in the present disclosure, so that a better coating effect of the composite cathode material is resulted. Preferably, the weight percentage of the LATP solid electrolyte material relative to the nickel-manganese compound material, such as Ni_{0.25}Mn_{0.75}(OH)₂ or Ni_{0.25}Mn_{0.75}O, is controlled and ranged from 0.2 wt.% to 0.3 wt.%. That is to say, in the present disclosure, only a small amount of lithium titanium aluminum phosphate (LATP) solid electrolyte is added to form the coating layer to improve the rate performance of the cathode material of lithium nickel manganese oxide (LMNO). The manufacturing cost is further reduced, and an optimized solid-electrolyte coating effect is achieved. On the other hand, it is worth noting that the lithium aluminum titanium phosphate (LATP) is mixed with the pretreatment material of the nickel-manganese compound material in the present disclosure, and then the pretreatment material with the LATP mixed is sintered to form the composite cathode material of lithium nickel manganese oxide (LMNO) with the LATP coated thereon. Preferably, the pretreatment material can be for example the nickel-manganese compound material of Ni_{0.25}Mn_{0.75}(OH)₂ or Ni_{0.25}Mn_{0.75}O. The cathode material of lithium nickel manganese oxide (LMNO) material is not directly used for coating process.

In a second comparative example, 0.2 wt.% LATP solid electrolyte material is added into the lithium nickel manganese oxide (LMNO) cathode material and add. The average particle size of lithium nickel manganese oxide (LMNO) cathode material is about 15.13 microns, with a surface area of 0.31 m²/g. The is directly coated on the surface of the lithium nickel manganese oxide (LMNO) cathode material in the same mixing manner, so as to obtain the second comparative example.

In a third comparative example, 0.2 wt.% LATP solid electrolyte material is added into the lithium nickel manganese oxide (LMNO) cathode material and add. The average particle size of lithium nickel manganese oxide (LMNO) cathode material is about 15.13 microns, with a surface area of 0.31 m²/g. The LATP solid electrolyte material is directly coated on the surface of the lithium nickel manganese oxide (LMNO) cathode material in the same mixing manner, and a further sintering process is performed, so as to obtain the third comparative example.

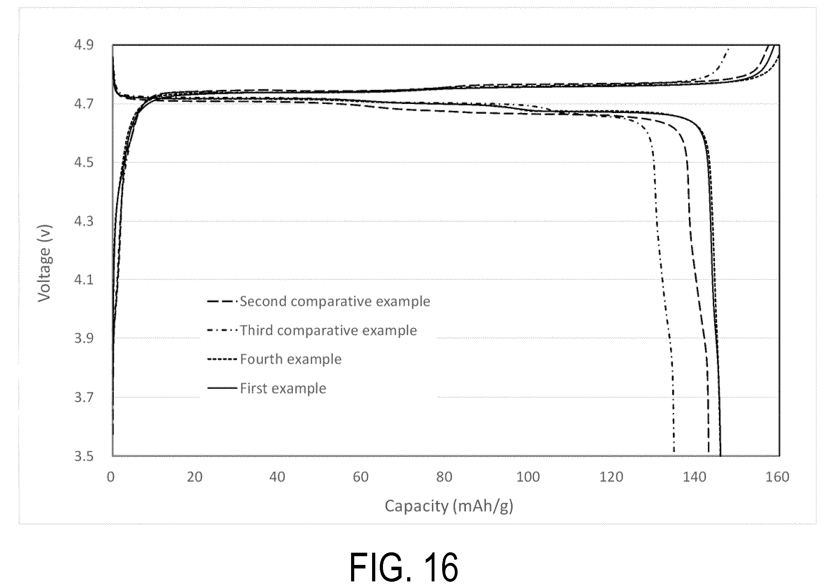

FIG. 16 shows the voltage vs. the charge and discharge capacity curves of the second comparative example, the third comparative example, the first example and the fourth example of the present disclosure. The button batteries made of the second comparative example, the third comparative example, the first example and the fourth example of the present disclosure are tested at a charge-discharge rate (C-rate) of 0.1C to obtain the results. The 0.1C first-cycle and the second-cycle charge and discharge capacity results are listed in Table 3. In addition, Table 3 also lists the rate performance results of the second comparative example, the third comparative example, the first example and the fourth example of the present disclosure charged at 0.2 and then discharged at 1C/2C/3C/5C. As shown in FIG. 16 and Table 3, the capacities and the rate performance of the first example and the fourth example of the present disclosure are all better than those of the second comparative example and the third comparative example. In the preparation method of the present disclosure, the dry mechanical mixing method is used to mix the nickel-manganese compound material and the LATP solid electrolyte material in advance. Then, the lithium source is added to mix and sinter with the forgoing composite material to form the composite cathode material with a core and a coating layer. It can be seen that the capacity and the rate performance of the composite cathode material prepared through the present disclosure are better than those of the lithium nickel manganese oxide (LMNO) cathode material with the LATP solid electrolyte material directly coated thereon.

**Table 3**

| Samples | 0.1C 1st-cycle charge/discharge capacity (mAh/g) | 0.1C 2nd-cycle charge/discharge capacity (mAh/g) | 1C/2C/3C/5C Discharge capacity (mAh/g) | Coulomb efficiency C.E. % |
|---|---|---|---|---|
| First example | 161/146 | 156/146 | 143/135/127/110 | 90.7 |
| Fourth example | 163/146 | 156/146 | 140/129/119/97 | 89.6 |
| Second comparative example | 150/135 | 144/136 | 132/122/112/91 | 90.0 |
| Third comparative example | 159/143 | 150/144 | 139/129/118/94 | 89.9 |

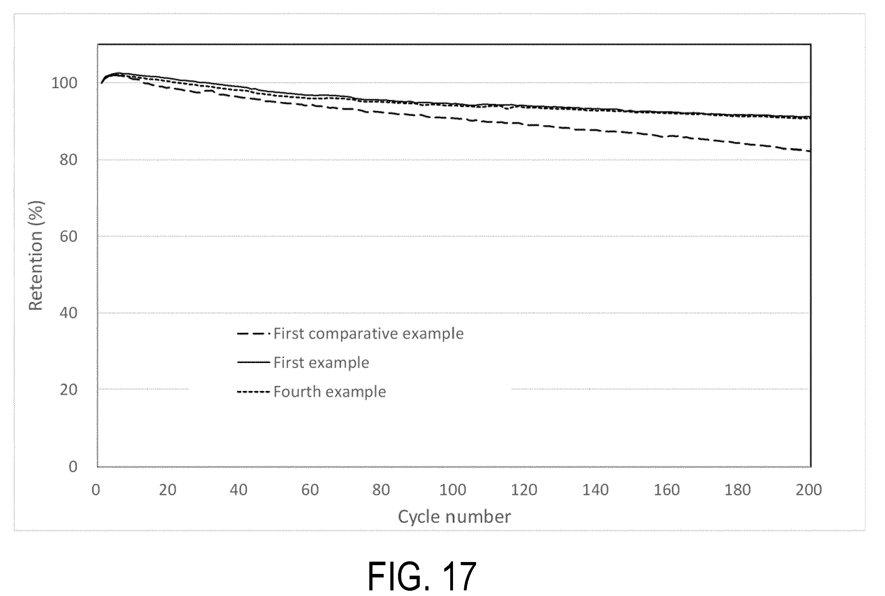

FIG. 17 shows the retention vs. the cycle number curves of the third comparative example, the first example and the fourth example of the present disclosure. The button batteries made of the third comparative example, the first example and the fourth example of the present disclosure are tested at a charge-discharge rate (C-rate) of 1C to obtain the results. As shown in FIG. 17, the capacity retention rates of the first example and the fourth example of the present disclosure are all better than those of the third comparative example. The retention after 200th cycles of the first example and the fourth example of the present disclosure is about 10% higher than that of the third comparative example. Different from the third comparative example, the lithium aluminum titanium phosphate (LATP) is mixed with the pretreatment material of the nickel-manganese compound material firstly through a mechanical mixing way such as a mechanofusion method according to the preparation method of the present disclosure. Then, the pretreatment material with the LATP mixed is sintered to form the composite cathode material of lithium nickel manganese oxide (LMNO) with the LATP coated thereon. In this way, the generation of Mn³⁺ is reduced, and the dissolution of Mn³⁺ from the positive electrode material and the reduction and deposition on the negative electrode are avoided from resulting in cycle electrical decline.

Notably, the preparation method of the present disclosure uses the dry mechanofusion method to mix the nickel-manganese compound material and the solid electrolyte material, and then performs the heat treatment to produce the LMNO cathode material, so that the solid electrolyte material is coated on the surface of the LMNO cathode material simultaneously when the LMNO cathode material is formed. The process is simple and fast. The performance of the composite cathode material obtained is improved sufficiently and better than that of the LMNO cathode material with the solid electrolyte material directly coated thereon. Furthermore, in order to obtain the optimal coating effect of the solid electrolyte material, only a small amount of LATP solid electrolyte material is added to form the coating layer to improve the rate performance of the LMNO cathode material, and the manufacturing cost is further reduced. By controlling the mixing way of the LATP solid electrolyte and the pretreatment material, the working temperature, the rotating speed and the working time, it allows to avoid the structural defects of the solid electrolyte coating layer caused by high temperature and the excessive friction between particles. At the same time, it ensures that the LMNO cathode material can exert low impedance and good charge and discharge performance through the coating layer of LATP solid electrolyte material.

Certainly, the compositions of the nickel-manganese compound material of Ni_{0.25}Mn_{0.75}(OH)₂ or Ni_{0.25}Mn_{0.75}O, the solid electrolyte material of lithium titanium aluminum phosphate (Li_{1.3}Al_{0.3}Ti_{1.7}(PO₄)₃, LATP) and the cathode material of lithium nickel manganese oxide (LiNi_{0.5}Mn_{1.5}O₄, LMNO) are adjustable according to the practical requirements. Preferably but not exclusively, the nickel-manganese compound material of NiₓMn_{y}(OH)₂ or NiₓMn_{y}O is mixed with the solid electrolyte material of Li_{1+z}Al_{z}Ti_{2-z}(PO₄)₃, x+y=1, and z≦2. Subsequently, the lithium source is added to mix and sinter, and the composite cathode material including the lithium nickel manganese oxide of LiNi₂ₓMn_{2y}O₄ with the lithium titanium aluminum phosphate of Li_{1+z}Al_{z}Ti_{2-z}(PO₄)₃ coated on the surface thereof is obtained. It is not redundantly described herein.

In summary, the present disclosure provides a preparation method of a composite cathode material. By using the dry mechanofusion method to mix the precursor and the solid electrolyte material, the solid electrolyte material is coated on the surface of the cathode material simultaneously when the cathode material is formed. The process is simple and fast, and the performance of the cathode material is improved sufficiently. For the application of lithium nickel manganese oxide (LMNO) cathode material coated the solid electrolyte of lithium titanium aluminum phosphate (Li_{1.3}Al_{0.3}Ti_{1.7}(PO₄)₃, LATP), the dry mechanical mixing method is used to mix the nickel-manganese compound material, such as Ni_{0.25}Mn_{0.75}(OH)₂ or Ni_{0.25}Mn_{0.75}O is mixed with the solid electrolyte material in advance, and then the lithium source is added to mix and sintered to form a composite cathode material with a core and a coating layer. The inner core is made of LiNi_{0.5}Mn_{1.5}O₄, and the outer coating layer is made of the solid electrolyte material. Since the solid electrolyte material of lithium aluminum titanium phosphate (LATP) has good ionic conductivity, when the lithium aluminum titanium phosphate (LATP) is coated on the surface of the cathode material of lithium nickel manganese oxide (LMNO) to form a composite cathode material, it facilitates to improve the rate performance and cycle performance of the cathode material of lithium nickel manganese oxide (LMNO), and the coating layer of lithium aluminum titanium phosphate (LATP) can also provide the protection to slow down the impact of the material surface being damaged by the electrolyte solution. Furthermore, in order to obtain the optimal coating effect of the solid electrolyte material, the weight percentage of the solid electrolyte material relative to nickel-manganese compound material, such as Ni_{0.25}Mn_{0.75}(OH)₂ or Ni_{0.25}Mn_{0.75}O, is controlled and ranged from 0.2 wt.% to 1.0 wt.%, preferably between 0.2 wt.% and 0.3 wt.%. That is to say, in the present disclosure, only a small amount of lithium titanium aluminum phosphate (LATP) solid electrolyte material is added to form the coating layer to improve the rate performance of the cathode material of lithium nickel manganese oxide (LMNO), and the manufacturing cost is further reduced. Compared with direct coating of the cathode material of lithium nickel manganese oxide (LMNO) with the lithium aluminum titanium phosphate (LATP), the lithium aluminum titanium phosphate (LATP) is mixed with the pretreatment material of the nickel-manganese compound material through a mechanical mixing way such as a mechanofusion method in the present disclosure. Then, the pretreatment material with the LATP mixed is sintered to form the composite cathode material of lithium nickel manganese oxide (LMNO) with the LATP coated thereon. In this way, the generation of Mn³⁺ is reduced, and the dissolution of Mn³⁺ from the positive electrode material and the reduction and deposition on the negative electrode are avoided from resulting in cycle electrical decline. The working temperature of the mixing process is ranged for example between 25°C and 45°C, and the mixing processing is performed in stages at a rotating speed ranged from 700 rpm to 3500 rpm for 5 minutes and 30 minutes. By controlling the mixing way of lithium aluminum titanium phosphate (LATP) and the pretreatment material, the working temperature, the rotating speed and the working time, it allows to avoid the structural defects of the solid electrolyte coating layer caused by high temperature and the excessive friction between particles. At the same time, it ensures that the cathode material of lithium nickel manganese oxide (LMNO) can exert low impedance and good charge and discharge performance through the coating layer of LATP solid electrolyte material.

## Claims

1. A preparation method of a composite cathode material, **characterized by** comprising steps of:
(a) providing a nickel-manganese compound material, wherein the nickel-manganese compound material is NiₓMn_{y}(OH)₂ or NiₓMn_{y}O, x+y=1;
(b) providing a solid electrolyte material, and mixing the nickel-manganese compound material and the solid electrolyte material in a mechanical mixing into a composite material, wherein the solid electrolyte material has a weight percentage relative to the nickel-manganese compound material, and the weight percentage is ranged from 0.2 wt.% to 1.0 wt.%; and
(c) providing a lithium source, mixing the lithium source and the composite material, and sintering to form the composite cathode material (1), wherein the composite cathode material (1) includes a core (10) and a coating layer (20), the core (10) is made of LiNi₂ₓMn_{2y}O₄, and coated by the coating layer (20), and the coating layer (20) is made of the solid electrolyte material.

2. The preparation method of the composite cathode material according to claim 1, wherein the nickel-manganese compound material is Ni_{0.25}Mn_{0.75}(OH)₂, the step (b) comprises a first heat treatment process after the mechanical mixing, and the first heat treatment process has a holding temperature ranged from 300 °C to 850 °C, a treating time ranged from 5 hours to 7 hours, and a temperature rising rate of 2.5°C/min.

3. The preparation method of the composite cathode material according to claim 1, wherein the nickel-manganese compound material is Ni_{0.25}Mn_{0.75}O, the step (a) comprises a pre-oxidation process, and the pre-oxidation process has a holding temperature ranged from 300°C to 850 °C, a treating time ranged from 5 hours to 7 hours, and a temperature rising rate of 2.5 °C/min.

4. The preparation method of the composite cathode material according to claim 3, wherein the step (b) comprises a first heat treatment process after the mechanical mixing, and the first heat treatment process has a holding temperature ranged from 300°C to 750°C, a treating time ranged from 5 hours to 7 hours, and a temperature rising rate of 2.5°C/min.

5. The preparation method of the composite cathode material according to claim 1, wherein the nickel-manganese compound material and the solid electrolyte material are mixed at a rotating speed of 700 rpm for 5 minutes, mixed at a rotating speed of 1400 rpm for 5 minutes, mixed at a rotating speed of 2100 rpm for 5 minutes, mixed at a rotating speed of 2800 rpm for 10 minutes and mixed at a rotating speed of 3500 rpm for 10 minutes in the mechanical mixing of the step (b).

6. The preparation method of the composite cathode material according to claim 1, wherein the nickel-manganese compound material and the solid electrolyte material are mixed at a working temperature ranged from 25 °C to 45 °C in the mechanical mixing of the step (b).

7. The preparation method of the composite cathode material according to claim 1, wherein the solid electrolyte material has a chemical formula of Li_{1+z}Al_{z}Ti_{2-z}(PO₄)₃, z≦2.

8. The preparation method of the composite cathode material according to claim 1, wherein the mechanical mixing includes a mechanofusion method.

9. The preparation method of the composite cathode material according to claim 1, wherein the lithium source and the composite material are mixed at a rotating speed of 700 rpm for 5 minutes, and mixed at a rotating speed of 1400 rpm for 30 minutes in a mechanical manner of the step (c).

10. The preparation method of the composite cathode material according to claim 1, wherein the step (c) comprises a second heat treatment process, and the second heat treatment process has a holding temperature ranged from 300°C to 710°C, a treating time ranged from 24 hours to 30 hours, and a temperature rising rate of 2.5°C/min.

11. The preparation method of the composite cathode material according to claim 1, wherein the nickel-manganese compound material has a molar ratio of 1:1.02 relative to the lithium source in the composite material in the step (c).

12. The preparation method of the composite cathode material according to claim 1, wherein the weight percentage of the solid electrolyte material relative to the nickel-manganese compound material is ranged from 0.2 wt.% to 0.3 wt.%.

13. The preparation method of the composite cathode material according to claim 1, wherein the nickel-manganese compound material has an average particle size ranged from 10 microns to 20 microns, and the solid electrolyte material has an average particle size ranged from 1 micron and 5 microns.

## Patentansprüche

1. Verfahren zur Herstellung eines Verbundkathodenmaterials, **dadurch gekennzeichnet, dass** es die folgenden Schritte umfasst:
(a) Bereitstellen eines Nickel-Mangan-Verbindungsmaterials, wobei das Nickel-Mangan-Verbindungsmaterial NiₓMn_{y}(OH)₂ oder NiₓMn_{y}O ist, x+y=1;
(b) Bereitstellen eines Festelektrolytmaterials und Mischen des Nickel-Mangan-Verbindungsmaterials und des Festelektrolytmaterials in einem mechanischen Mischvorgang zu einem Verbundmaterial, wobei das Festelektrolytmaterial einen Gewichtsprozentsatz relativ zu dem Nickel-Mangan-Verbindungsmaterial aufweist und der Gewichtsprozentsatz im Bereich von 0,2 Gew.-% bis 1,0 Gew.-% liegt; und
(c) Bereitstellen einer Lithiumquelle, Mischen der Lithiumquelle und des Kompositmaterials und Sintern, um das Kompositkathodenmaterial (1) zu bilden, wobei das Kompositkathodenmaterial (1) einen Kern (10) und eine Überzugsschicht (20) umfasst, der Kern (10) aus LiNi₂ₓMn_{2y}O₄ hergestellt und von der Überzugsschicht (20) überzogen ist und die Überzugsschicht (20) aus dem Festelektrolytmaterial hergestellt ist.

2. Verfahren zur Herstellung eines Verbundkathodenmaterials nach Anspruch 1, wobei das Nickel-Mangan-Verbindungsmaterial Ni_{0,25}Mn_{0,75}(OH)₂ ist, der Schritt (b) einen ersten Wärmebehandlungsprozess nach dem mechanischen Mischen umfasst und der erste Wärmebehandlungsprozess eine Haltetemperatur im Bereich von 300 °C bis 850 °C, eine Behandlungszeit im Bereich von 5 Stunden bis 7 Stunden und eine Temperaturanstiegsrate von 2,5 °C/min aufweist.

3. Verfahren zur Herstellung eines Verbundkathodenmaterials nach Anspruch 1, wobei das Nickel-Mangan-Verbindungsmaterial Ni_{0,25}Mn_{0,75}O ist, der Schritt (a) einen Voroxidationsprozess umfasst und der Voroxidationsprozess eine Haltetemperatur im Bereich von 300 °C bis 850 °C, eine Behandlungszeit im Bereich von 5 Stunden bis 7 Stunden und eine Temperaturanstiegsrate von 2,5 °C/min aufweist.

4. Verfahren zur Herstellung eines Verbundkathodenmaterials gemäß Anspruch 3, wobei der Schritt (b) einen ersten Wärmebehandlungsprozess nach dem mechanischen Mischen umfasst und der erste Wärmebehandlungsprozess eine Haltetemperatur im Bereich von 300°C bis 750°C, eine Behandlungszeit im Bereich von 5 Stunden bis 7 Stunden und eine Temperaturanstiegsrate von 2,5°C/min aufweist.

5. Verfahren zur Herstellung eines Verbundkathodenmaterials nach Anspruch 1, wobei das Nickel-Mangan-Verbindungsmaterial und das Festelektrolytmaterial beim mechanischen Mischen des Schritts (b) 5 Minuten lang mit einer Rotationsgeschwindigkeit von 700 U/min, 5 Minuten lang mit einer Rotationsgeschwindigkeit von 1400 U/min, 5 Minuten lang mit einer Rotationsgeschwindigkeit von 2100 U/min, 10 Minuten lang mit einer Rotationsgeschwindigkeit von 2800 U/min und 10 Minuten lang mit einer Rotationsgeschwindigkeit von 3500 U/min gemischt werden.

6. Verfahren zur Herstellung eines Verbundkathodenmaterials nach Anspruch 1, wobei das Nickel-Mangan-Verbindungsmaterial und das Festelektrolytmaterial beim mechanischen Mischen des Schritts (b) bei einer Arbeitstemperatur im Bereich von 25 °C bis 45 °C gemischt werden.

7. Verfahren zur Herstellung des Verbundkathodenmaterials nach Anspruch 1, wobei das Festelektrolytmaterial die chemische Formel Li_{1+z}Al_{z}Ti_{2-z}(PO₄)₃ hat, z≦ 2.

8. Verfahren zur Herstellung eines Verbundkathodenmaterials nach Anspruch 1, wobei das mechanische Mischen ein Mechanofusionsverfahren umfasst.

9. Verfahren zur Herstellung eines Verbundkathodenmaterials nach Anspruch 1, wobei die Lithiumquelle und das zusammengesetzte Material bei einer Rotationsgeschwindigkeit von 700 U/min für 5 Minuten gemischt werden und bei einer Rotationsgeschwindigkeit von 1400 U/min für 30 Minuten in einer mechanischen Weise des Schritts (c) gemischt werden.

10. Verfahren zur Herstellung eines Verbundkathodenmaterials nach Anspruch 1, wobei der Schritt (c) einen zweiten Wärmebehandlungsprozess umfasst und der zweite Wärmebehandlungsprozess eine Haltetemperatur im Bereich von 300°C bis 710°C, eine Behandlungszeit im Bereich von 24 Stunden bis 30 Stunden und eine Temperaturanstiegsrate von 2,5°C/min aufweist.

11. Verfahren zur Herstellung eines Verbundkathodenmaterials nach Anspruch 1, wobei das Nickel-Mangan-Verbindungsmaterial ein Molverhältnis von 1:1,02 relativ zur Lithiumquelle in dem Verbundmaterial in Schritt (c) aufweist.

12. Verfahren zur Herstellung eines Verbundkathodenmaterials nach Anspruch 1, wobei der Gewichtsprozentsatz des Festelektrolytmaterials, bezogen auf das Nickel-Mangan-Verbindungsmaterial, im Bereich von 0,2 Gew.-% bis 0,3 Gew.-% liegt.

13. Verfahren zur Herstellung eines Verbundkathodenmaterials nach Anspruch 1, wobei das Nickel-Mangan-Verbindungsmaterial eine durchschnittliche Teilchengröße im Bereich von 10 Mikrometer bis 20 Mikrometer und das Festelektrolytmaterial eine durchschnittliche Teilchengröße im Bereich von 1 Mikrometer bis 5 Mikrometer aufweist.

## Revendications

1. Un procédé de préparation d'un matériau cathodique composite, **caractérisé en ce qu'**il comprend les étapes suivantes :
(a) fournir un matériau de composé de nickel-manganèse, dans lequel le matériau de composé de nickel-manganèse est NiₓMn_{y}(OH)₂ ou NiₓMn_{y}O, x+y=1 ;
(b) fournir un matériau d'électrolyte solide et mélanger le matériau de composé de nickel-manganèse et le matériau d'électrolyte solide dans un processus de mélange mécanique pour former un matériau composite, le matériau d'électrolyte solide ayant un pourcentage en poids par rapport au matériau de composé de nickel-manganèse, le pourcentage en poids étant dans la plage de 0,2 % en poids à 1,0 % en poids ; et
(c) fournir une source de lithium, mélanger la source de lithium et le matériau composite et fritter pour former le matériau de cathode composite (1), le matériau de cathode composite (1) comprenant un noyau (10) et une couche de revêtement (20), le noyau (10) étant fait de LiNi₂ₓMn_{2y}O₄ et recouvert par la couche de revêtement (20), la couche de revêtement (20) étant faite du matériau d'électrolyte solide.

2. Le procédé de préparation d'un matériau cathodique composite selon la revendication 1, dans lequel le matériau composite nickel-manganèse est Ni_{0,25}Mn_{0,75}(OH)₂, l'étape (b) comprend un premier processus de traitement thermique après mélange mécanique, et le premier processus de traitement thermique a une température de maintien dans la plage de 300°C à 850°C, un temps de traitement dans la plage de 5 heures à 7 heures et une vitesse d'augmentation de la température de 2,5°C/min.

3. Le procédé de préparation d'un matériau cathodique composite selon la revendication 1, dans lequel le matériau composite nickel-manganèse est Ni_{0,25}Mn_{0,75}O, l'étape (a) comprend un processus de pré-oxydation, et le processus de pré-oxydation a une température de maintien dans la plage de 300°C à 850°C, un temps de traitement dans la plage de 5 heures à 7 heures et une vitesse d'augmentation de la température de 2,5°C/min.

4. Le procédé de préparation d'un matériau cathodique composite selon revendication 3, dans lequel l'étape (b) comprend un premier processus de traitement thermique après le mélange mécanique, le premier processus de traitement thermique ayant une température de maintien dans la plage de 300°C à 750°C, un temps de traitement dans la plage de 5 heures à 7 heures et une vitesse d'augmentation de la température de 2,5°C/min.

5. Le procédé de préparation d'un matériau cathodique composite selon la revendication 1, dans lequel, lors du mélange mécanique de l'étape (b), le matériau de liaison nickel-manganèse et le matériau d'électrolyte solide sont mélangés pendant 5 minutes à une vitesse de rotation de 700 tr/min, pendant 5 minutes à une vitesse de rotation de 1400 tr/min, pendant 5 minutes à une vitesse de rotation de 2100 tr/min, pendant 10 minutes à une vitesse de rotation de 2800 tr/min et pendant 10 minutes à une vitesse de rotation de 3500 tr/min.

6. Le procédé de préparation d'un matériau cathodique composite selon la revendication 1, dans lequel le matériau de liaison nickel-manganèse et le matériau d'électrolyte solide sont mélangés lors du mélange mécanique de l'étape (b) à une température de travail dans la plage de 25°C à 45°C.

7. Le procédé de préparation d'un matériau cathodique composite selon la revendication 1, dans lequel le matériau d'électrolyte solide a la formule chimique Li_{1+z}Al_{z}Ti_{2-z}(PO₄)₃, z≦ 2.

8. Le procédé de préparation d'un matériau cathodique composite selon la revendication 1, dans lequel le mélange mécanique comprend un procédé de mécanofusion.

9. Le procédé de préparation d'un matériau cathodique composite selon la revendication 1, dans lequel la source de lithium et le matériau composite sont mélangés à une vitesse de rotation de 700 tr/min pendant 5 minutes et sont mélangés à une vitesse de rotation de 1400 tr/min pendant 30 minutes d'une manière mécanique de l'étape (c).

10. Le procédé de préparation d'un matériau cathodique composite selon la revendication 1, dans lequel l'étape (c) comprend un second processus de traitement thermique, le second processus de traitement thermique ayant une température de maintien dans la plage de 300°C à 710°C, une durée de traitement dans la plage de 24 heures à 30 heures et une vitesse d'augmentation de la température de 2,5°C/min.

11. Le procédé de préparation d'un matériau cathodique composite selon la revendication 1, dans lequel le matériau composite de nickel-manganèse a un rapport molaire de 1:1,02 par rapport à la source de lithium dans le matériau composite dans l'étape (c).

12. Le procédé de préparation d'un matériau cathodique composite selon la revendication 1, dans lequel le pourcentage en poids du matériau d'électrolyte solide par rapport au matériau de composé de nickel et de manganèse est dans la plage de 0,2 % à 0,3 % en poids.

13. Le procédé de préparation d'un matériau cathodique composite selon la revendication 1, dans lequel le matériau composite nickel-manganèse a une taille moyenne de particules dans la plage de 10 micromètres à 20 micromètres et le matériau électrolyte solide a une taille moyenne de particules dans la plage de 1 micromètre à 5 micromètres.
